# FASCICULE DE BREVET EUROPEEN

(11) **EP 2 865 971 B1**
(45) Date de publication et mention de la délivrance du brevet: **08.06.2016**
(21) Numéro de dépôt: 14306632.2
(22) Date de dépôt: 15.10.2014
(51) Int. Cl.: F25D 3/10, B60H 1/00, B60H 1/32

(54) **Procédé de régulation pour le chauffage et le maintien à température positive d'une caisse de transport frigorifique par voie cryogénique**
Regulierverfahren für die Beheizung und Aufrechterhaltung der Temperatur im positiven Bereich einer Kühltransportbox durch kryogenes Verfahren
Control method for heating and maintaining a positive temperature in a cryogenic refrigerated transport box

(30) Priorité: 23.10.2013 FR 1360309
(43) Date de publication de la demande: 29.04.2015
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CLEMENT, Cécile, 91400 SACLAY (FR); DALLAIS, Antony, 91640 JANVRY (FR); YOUBI-IDRISSI, Mohammed, 91300 MASSY (FR); ZERBINATTI, Celso, 78530 BUC (FR)
(74) Mandataire: Mellul-Bendelac, Sylvie Lisette

(56) Documents cités:
- WO-A1-2004/072565
- DE-A1-102011 014 746
- JP-A- 2003 240 403
- US-A1- 2003 019 219
- US-A1- 2009 266 100
- US-A1- 2013 014 522

## Description

La présente invention concerne le domaine du transport et de la distribution de produits thermosensibles, tels les produits pharmaceutiques et les denrées alimentaires, biologiques, botaniques ou tous autres produits nécessitant un contrôle de température qu'elle soit positive ou négative. Cette invention concerne plus particulièrement le maintien en température positive des enceintes frigorifiques fonctionnant avec un groupe cryogénique.

En effet dans ce domaine, les dispositifs doivent être capables de maintenir une température négative (typiquement pour les produits surgelés, avec une consigne voisine de -20 °C), mais aussi positive (typiquement une température voisine de 4°C pour des produits alimentaires frais), ceci, indépendamment des conditions de température extérieure.

C'est pourquoi, il est nécessaire de prévoir un moyen de chauffage pour gérer les cas où la température extérieure est inférieure à la température à maintenir dans l'enceinte isotherme, par exemple quand la température extérieure est très négative (période hivernale en Europe, dans les pays nordiques, au Canada etc...).

Comme signalé ci-dessus, l'invention s'intéresse tout particulièrement aux technologies où le froid nécessaire au maintien en température des produits est fourni par un groupe cryogénique fonctionnant en boucle ouverte et mettant en oeuvre :
- une injection directe d'un fluide cryogénique dans la caisse de transport (très souvent de l'azote liquide) ;
   ou
- une injection dite « indirecte » d'un fluide cryogénique (tel l'azote liquide ou le CO₂ liquide, ...) dans la caisse de transport qui met en oeuvre un ou plusieurs échangeur(s) de chaleur dans l'enceinte interne où sont transportés les produits (on parle aussi de « chambre », de « boite », de « caisse » isotherme...), échangeur dans lequel circule le fluide cryogénique, l'enceinte étant par ailleurs munie d'un système de circulation d'air (ventilateurs) mettant en contact cet air avec les parois froides de l'échangeur, ce qui permet ainsi de refroidir l'air interne de la chambre froide du camion, le fluide cryogénique alimentant le ou les échangeur(s) provenant d'un réservoir de cryogène traditionnellement situé sous le camion.

Revenons donc maintenant à la problématique du maintien en température positive de l'intérieur de la caisse malgré des températures extérieures très rigoureuses, problématique au sujet de laquelle la littérature évoque différents moyens, moyens que l'on peut les classer en deux groupes :

### 1 - les moyens réalisant un échange de chaleur indirect par fluide caloporteur (eau, eau glycolée, huile)

La production de chaleur peut être réalisée par différentes sources parmi lesquelles ont peut citer à titre illustratif :
- le brulage de combustibles notamment diesel, fioul, dans une chaudière qui va chauffer un fluide. Celui-ci est en circulation dans un échangeur. Ce fluide caloporteur va alors céder sa chaleur au travers de l'échangeur qui est placé à l'intérieur de l'enceinte du camion qui va voir sa température augmenter ;
- le circuit de refroidissement du moteur thermique du véhicule : l'eau chauffée par le dégagement de chaleur due à la combustion interne du moteur, peut être récupérée et utilisée dans un échangeur de chaleur ici encore placé à l'intérieur de l'enceinte.

### 2 - les moyens réalisant un échange direct par conduction et rayonnement

S'agissant du chauffage par conduction on trouve essentiellement l'utilisation de résistances électriques, sous formes diverses. La source d'alimentation provient le plus souvent de batteries électriques.

L'inconvénient de cette source d'énergie est principalement lié à sa faible autonomie. Le temps de fonctionnement est directement lié au nombre et à la capacité de stockage des batteries.

L'autre facteur limitant cette solution est la puissance maximum disponible. En effet la puissance nécessaire pour les besoins de chauffage pour une caisse de type porteur d'un volume approximatif de 60m³ est voisine de 4kW pour un écart de 15K entre la température intérieure de la caisse et la température extérieure. Compte tenu de la tension des batteries fixée par exemple à 24V, le courant nécessaire devient élevé, typiquement voisin de 166 A.

L'utilisation de panneaux photovoltaïques peut certes augmenter l'autonomie des batteries en les rechargeant, mais seulement quand les conditions climatiques sont favorables.

Le document US2009/0266100 illustre le domaine du transport cryogénique de produits thermosensibles et propose le contrôle de températures différenciées dans des zones différentes du véhicule.

C'est également le cas du document DE-10 2011 014746.

Le document US2003/019219 illustre le domaine du transport cryogénique de produits thermosensibles nécessitant selon les produits transportés le contrôle de températures positives ou négatives.

Un des objectifs de la présente invention est alors de proposer une amélioration des procédés de chauffage de type chaudière et particulièrement de la régulation de tels procédés de chauffage de type chaudière par brulage de combustible, par exemple le diesel, où un fluide (par exemple de l'eau) est chauffé dans la chaudière et envoyé en circulation dans un échangeur interne à la chambre de stockage des produits du camion, amélioration qui puisse permettre de gérer tant des situations de grand froid (typiquement où l'écart de température entre une consigne à respecter dans la chambre et la température régnant à l'extérieur du camion est supérieur à 15°C) et de froid tempéré (typiquement où l'écart de température entre une consigne à respecter dans la chambre et la température régnant à l'extérieur du camion est inférieur à 15°C).

Comme on le verra plus en détail dans ce qui suit, la présente invention propose de réguler le chauffage en agissant sur le ou certains des ventilateurs de brassage d'air chaud, avec selon le cas et les constatations effectuées, des rétroactions d'arrêt, de diminution, ou d'augmentation de la ventilation.

Et selon un aspect de l'invention, la régulation fait une différence selon que l'écart de température entre une consigne à respecter dans la chambre et la température régnant à l'extérieur du camion est supérieur ou inférieur à 15°C :
i) si l'écart de température entre une consigne à respecter dans la chambre et la température régnant à l'extérieur du camion est supérieur à 15°C:
   a) si la température régnant à l'intérieur de la chambre est inférieure à la dite température de consigne, le contrôleur met en marche le système de chauffage de la manière suivante :
      - on admet du fluide chaud, par exemple de l'eau chaude, produit par la chaudière dans l'échangeur thermique de chauffage ;
      - on met en marche le ventilateur de brassage d'air chaud pour amener au contact des parois de l'échangeur de chauffage de l'air interne et/ou externe à la chambre.
   b) si la température régnant à l'intérieur de la chambre approche de ladite température de consigne ou atteint cette consigne (on considère qu'elle approche de la température de consigne à environ ± [0.5°C à 2°C] de cette consigne), on ordonne l'arrêt ou la réduction de la vitesse de rotation du ou des ventilateurs associés au système d'échangeur chaud, ceci pour diminuer le débit d'air au contact de l'échangeur thermique de chauffage.
   c/ si la température régnant à l'intérieur de la chambre devient supérieure à ladite température de consigne, la régulation prend en compte une constante de temps de la manière suivante : si la température régnant à l'intérieur de la chambre reste supérieure à ladite température de consigne au delà d'une constante de temps t₀ (par exemple 5 mn) le contrôleur ordonne la réduction de la puissance de la chaudière via la réduction de la température du fluide circulant dans la chaudière.
   d) si la température régnant à l'intérieur de la chambre redevient inférieure à ladite température de consigne (donc hors de la gamme des ± 0.5 à 2°C de la consigne évoquée ci-dessus), le contrôleur ordonne la remise en route du ou des ventilateurs associés au système d'échangeur chaud ou l'augmentation de leur vitesse de rotation (par rapport à une diminution qui serait intervenue dans le cadre du paragraphe b) ci-dessus) et si la température régnant à l'intérieur de la chambre demeure inférieure à ladite température de consigne au-delà d'une constante de temps (par exemple 5min), le contrôleur ordonne l'augmentation de la puissance de la chaudière via l'augmentation de la température du fluide circulant dans la chaudière.

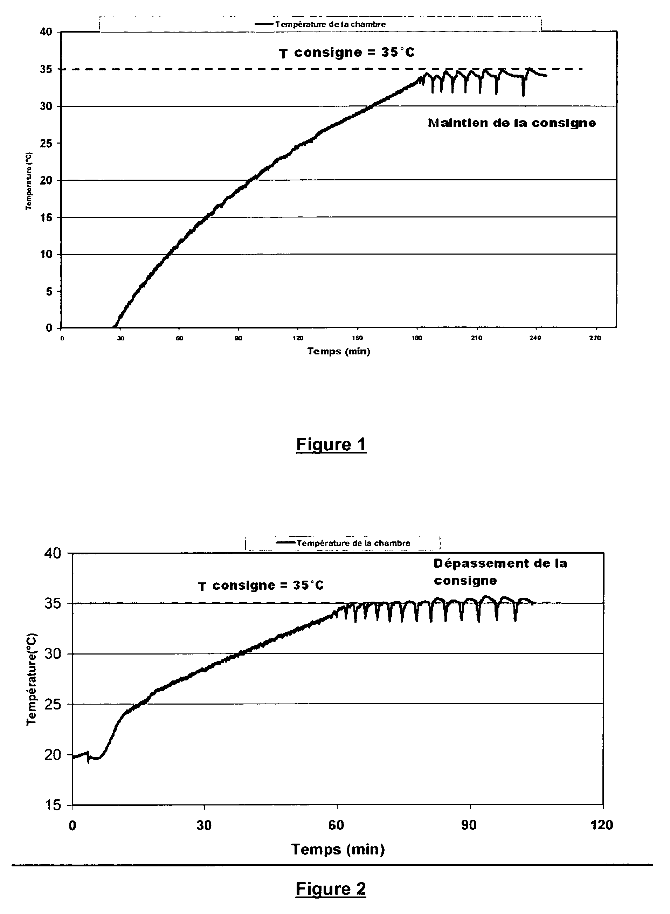

   La Figure 1 annexée illustre le cas d'une consigne égale à 35°C, avec un écart de température entre la consigne à respecter dans la chambre et la température extérieure de 15°C.
j) si l'écart de température entre une consigne à respecter dans la chambre et la température régnant à l'extérieur du camion est inférieur ou égal à 15°C, on procède à la régulation du chauffage par la prise en compte d'une constante de temps pour déclencher l'arrêt et le redémarrage de la production de calories, par l'adoption de l'un des modes d'action suivants :
   - Mode d'action a) : si la température régnant à l'intérieur de la chambre est supérieure à la dite température de consigne, le contrôleur ordonne d'abord l'arrêt ou la réduction de la vitesse de rotation du ou des ventilateurs associés au système d'échangeur chaud, et si la température régnant à l'intérieur de la chambre demeure supérieure à la dite température de consigne au delà d'une constante de temps t₀ (par exemple 5 mn) le contrôleur ordonne alors l'arrêt de la chaudière. La figure 2 annexée illustre cette configuration.
      ou
   - Mode d'action b) : si la température régnant à l'intérieur de la chambre est supérieure à la dite température de consigne, on ordonne d'abord l'arrêt ou la réduction de la vitesse de rotation du ou des ventilateurs associés au système d'échangeur chaud, et si la température régnant à l'intérieur de la chambre demeure supérieure à la dite température de consigne au delà d'une constante de temps t₀, on ordonne alors la fermeture totale ou partielle de l'arrivée de fluide dans la chaudière, la chaudière demeurant opérationnelle (en marche).

Quand la température régnant à l'intérieur de la chambre redevient inférieure à ladite température de consigne au-delà d'une constance de temps to et si la fermeture totale ou partielle de l'arrivée de fluide dans la chaudière avait été ordonnée, le contrôleur constate une augmentation du besoin de puissance, il ordonne alors la réouverture partielle ou totale de la chaudière ainsi que la remise en route du ou des ventilateurs associés au système d'échangeur chaud ou l'augmentation de leur vitesse de rotation (par rapport à une diminution qui était intervenue).

Selon un des modes de réalisation de ce mode d'action b) (fermeture totale ou partielle de l'arrivée de fluide dans la chaudière), on limite l'apport de calories dans la chambre en bipassant l'échangeur de chaleur tout en conservant la chaudière en fonctionnement. Pour cela on met en oeuvre un échangeur de chaleur qui est constitué de deux circuits de fluide (par exemple d'eau chaude). Moyennant des électrovannes correctement positionnées sur chaque circuit, il est possible de réduire le débit d'eau chaude en circulation au travers de l'échangeur. Ainsi quand le besoin de puissance diminue, le contrôleur commande la fermeture partielle ou totale du circuit d'eau chaude, par l'intermédiaire des électrovannes placées en amont de l'échangeur. Si les deux circuits sont fermés, la chaudière fonctionne en boucle sur elle-même, il n'y a plus nécessité de demander son arrêt. L'apport de puissance dans l'enceinte est alors parfaitement contrôlé.

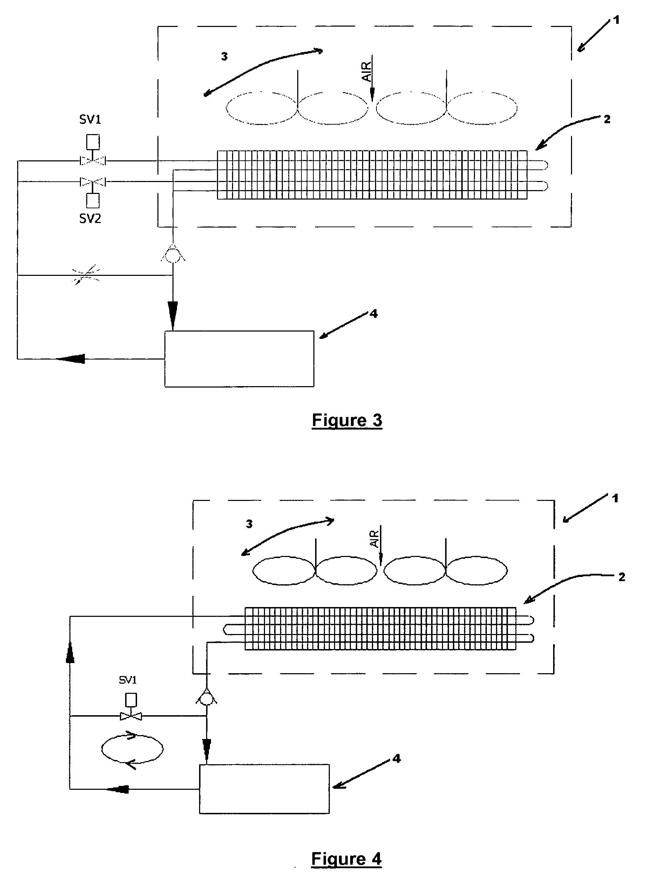

La figure 3 annexée illustre un tel mode de réalisation : on reconnait sur cette figure 3 la chambre isotherme 1 interne au camion, munie d'un échangeur de chaleur 2 auquel est associé un système de ventilation 3.

L'échangeur est alimenté en eau chaude à partir d'une chaudière 4 présente sur le camion, et comme on l'a signalé plus haut, l'installation comporte deux électrovannes SV1 et SV2, placées en amont de l'échangeur, et alimentant deux circuits d'eau chaude. Il est alors possible grâce à ce jeu d'électrovannes d'alimenter un seul des circuits d'eau, ou aucun.

Selon un autre des modes de réalisation de ce mode d'action b) (fermeture totale ou partielle de l'arrivée de fluide dans la chaudière), on limite l'apport de calories dans la chambre en implémentant un autre moyen de by-passer l'échangeur de chaleur tout en conservant la chaudière en fonctionnement : pour cela, on met en oeuvre un échangeur de chaleur qui est constitué ici d'un seul circuit de fluide (par exemple d'eau chaude). Moyennant une électrovanne correctement positionné sur le circuit principal, il est possible de couper le débit d'eau chaude en circulation au travers de l'échangeur.

La figure 4 annexée illustre un tel mode de réalisation : on reconnait sur cette figure 4 la chambre isotherme 1 interne au camion, munie d'un échangeur de chaleur 2 auquel est associé un système de ventilation 3.

L'échangeur est alimenté en eau chaude à partir d'une chaudière 4 présente sur le camion, et comme on l'a signalé plus haut, quand le besoin de puissance diminue, le système ouvre la vanne SV1, et la perte de charge sur l'échangeur étant plus élevée, l'eau chaude circule sur la petite boucle « chaudière/vanne SV1/chaudière » et la chaudière ici encore fonctionne alors en boucle sur elle-même, il n'y a plus nécessité de demander son arrêt. L'apport de puissance dans l'enceinte est contrôlé en mode « tout ou rien » permettant une régulation plus fine de la température.

## Revendications

1. **Procédé de transport de produits thermosensibles** en camion réfrigéré, où le camion est muni d'au moins une chambre (1) de stockage des produits, le camion comprenant de plus un système de chauffage apte à chauffer l'air interne à au moins une des chambres, système de chauffage qui comprend au moins un ventilateur (3) de brassage d'air chaud interne à ladite au moins une chambre dont on souhaite chauffer l'air interne, et qui est un système de type aérotherme, où de l'air à réchauffer, provenant de l'extérieur et/ou de l'intérieur de la chambre, est soufflé, à l'aide du dit ventilateur de brassage d'air chaud, au travers d'un échangeur thermique de chauffage (2) situé à l'intérieur de la chambre, échangeur thermique de chauffage alimenté par un fluide chaud, par exemple de l'eau chaude, produit par une chaudière (4) située sur le véhicule à l'extérieur de la chambre,
où l'on procède à la régulation du chauffage en agissant sur le ou certains des ventilateurs de brassage d'air chaud, en ordonnant, sur la base de la prise en compte d'un ou de plusieurs événements, une rétroaction d'arrêt de la ventilation, ou de diminution de la vitesse de ventilation, ou d'augmentation de la vitesse de ventilation, du ou des ventilateurs concernés,
**se caractérisant en ce que** :
A/ si l'écart de température entre une consigne à respecter dans la chambre et la température régnant à l'extérieur du camion est supérieur à 15°C, la régulation prend en compte les situations suivantes :
a) si la température régnant à l'intérieur de la chambre est inférieure à la dite température de consigne, le contrôleur met en marche le système de chauffage de la manière suivante :
- on admet du fluide chaud, par exemple de l'eau chaude, produit par la chaudière dans l'échangeur thermique de chauffage ;
- on met en marche le ventilateur de brassage d'air chaud pour amener au contact des parois de l'échangeur de chauffage de l'air interne et/ou externe à la chambre.
b) si la température régnant à l'intérieur de la chambre approche de ladite température de consigne ou atteint cette consigne on ordonne l'arrêt ou la réduction de la vitesse de rotation du ou des ventilateurs associés au système d'échangeur chaud.
c/ si la température régnant à l'intérieur de la chambre devient supérieure à ladite température de consigne, la régulation prend en compte une constante de temps de la manière suivante : si la température régnant à l'intérieur de la chambre reste supérieure à ladite température de consigne au delà d'une constante de temps t₀, par exemple 5 mn, le contrôleur ordonne la réduction de la puissance de la chaudière via la réduction de la température du fluide circulant dans la chaudière.
d) si la température régnant à l'intérieur de la chambre redevient inférieure à ladite température de consigne, le contrôleur ordonne la remise en route du ou des ventilateurs associés au système d'échangeur chaud ou l'augmentation de leur vitesse de rotation par rapport à une diminution qui serait intervenue précédemment, et si la température régnant à l'intérieur de la chambre demeure inférieure à ladite température de consigne au-delà d'une constante de temps, par exemple 5 mn, le contrôleur ordonne l'augmentation de la puissance de la chaudière via l'augmentation de la température du fluide circulant dans la chaudière.
et
B/ si l'écart de température entre une consigne à respecter dans la chambre et la température régnant à l'extérieur du camion est inférieur ou égal à 15°C, la régulation prend en compte une constante de temps pour déclencher l'arrêt ou le redémarrage de la production de calories, par l'adoption de l'un ou l'autre des modes d'action suivants :
- Mode d'action a) : si la température régnant à l'intérieur de la chambre est supérieure à la dite température de consigne, le contrôleur ordonne d'abord l'arrêt ou la réduction de la vitesse de rotation du ou des ventilateurs associés au système d'échangeur chaud, et si la température régnant à l'intérieur de la chambre demeure supérieure à la dite température de consigne au delà d'une constante de temps t₀, par exemple 5 mn, le contrôleur ordonne alors l'arrêt de la chaudière. *
ou
- Mode d'action b) : si la température régnant à l'intérieur de la chambre est supérieure à la dite température de consigne, le contrôleur ordonne d'abord l'arrêt ou la réduction de la vitesse de rotation du ou des ventilateurs associés au système d'échangeur chaud, et si la température régnant à l'intérieur de la chambre demeure supérieure à la dite température de consigne au delà d'une constante de temps t₀, par exemple 5 mn, le contrôleur ordonne alors la fermeture totale ou partielle de l'arrivée de fluide dans la chaudière, la chaudière demeurant opérationnelle.

2. Procédé selon la revendication 1, **se caractérisant en ce que** la régulation prend en compte au moins un des événements suivants :
- un capteur de température extérieure au véhicule a détecté que celle-ci est inférieure à une consigne de température interne à la chambre ;
- un capteur de température interne à la chambre a détecté que celle-ci est inférieure à une consigne de température interne à la chambre .

3. Procédé selon la revendication 1, **se caractérisant en ce que** dans la variante B/ quand la température régnant à l'intérieur de la chambre redevient inférieure à ladite température de consigne au-delà d'une constance de temps to et si la fermeture totale ou partielle de l'arrivée de fluide dans la chaudière avait été ordonnée, le contrôleur constate une augmentation du besoin de puissance, et il ordonne alors la réouverture partielle ou totale de la chaudière ainsi que la remise en route du ou des ventilateurs associés au système d'échangeur chaud ou l'augmentation de leur vitesse de rotation quand une diminution était intervenue précédemment.

4. Procédé selon la revendication 1, **se caractérisant en ce que** dans la variante B/ l'échangeur de chaleur est constitué de deux circuits de fluide, et **en ce que** l'on dispose de deux électrovannes (SV1, SV2) aptes chacune à autoriser ou interdire l'arrivée de fluide en provenance de la chaudière dans chacun des deux circuits de fluide de l'échangeur, et **en ce que** le contrôleur ordonne la fermeture totale ou partielle de l'arrivée de fluide dans la chaudière en ordonnant la fermeture de l'une ou chacune des dites deux électrovannes, la chaudière fonctionnant en boucle sur elle-même quand les deux électrovannes sont fermées.

5. Procédé selon la revendication 1, **se caractérisant en ce que** dans la variante B/ l'échangeur de chaleur est constitué d'un seul circuit de fluide, et **en ce que** l'on dispose d'une électrovanne (SV1) qui est en communication de fluide avec la ligne d'arrivée de fluide chaud dans l'échangeur d'une part, et avec la ligne d'évacuation du fluide chaud de l'échangeur d'autre part, et **en ce que** le contrôleur ordonne la fermeture totale de l'arrivée de fluide dans la chaudière en ordonnant l'ouverture de ladite électrovanne (EV1), pour contraindre, par différence de perte de charge, le fluide chaud en provenance de la chaudière à circuler en boucle fermée « chaudière/Electrovanne SV1/chaudière » sans attendre l'échangeur.

6. Procédé selon l'une des revendications précédentes, **se caractérisant en ce que** le camion met en oeuvre un système de production de froid de type à injection directe d'un fluide cryogénique dans la chambre, fluide qui se vaporise en extrayant de la chaleur des produits transportés.

7. Procédé selon l'une des revendications 1 à 5, **se caractérisant en ce que** le camion met en oeuvre un système de production de froid de type à injection indirecte d'un fluide cryogénique dans des échangeurs présents dans la chambre.

8. **Véhicule de transport de produits thermosensibles** en camion réfrigéré, camion muni :
- d'au moins une chambre de stockage des produits,
- d'une réserve d'un fluide cryogénique tel l'azote liquide,
- le camion comprenant de plus un système de chauffage apte à chauffer l'air interne à au moins une des chambres, système de chauffage qui comprend au moins un ventilateur de brassage d'air chaud interne à ladite au moins une chambre dont on souhaite chauffer l'air interne, et qui est un système de type aérotherme, où de l'air à réchauffer, provenant de l'extérieur et/ou de l'intérieur de la chambre, est soufflé, à l'aide du dit ventilateur de brassage d'air chaud, au travers d'un échangeur thermique de chauffage situé à l'intérieur de la chambre, échangeur thermique de chauffage alimenté par un fluide chaud, par exemple de l'eau chaude, produit par une chaudière située sur le véhicule à l'extérieur de la chambre,
**se caractérisant en ce :**
- **qu'**il comprend un contrôleur, apte à permettre la mise en oeuvre du procédé selon l'une des revendications 1 à 7 et notamment à réguler le chauffage en agissant sur le ou certains des ventilateurs de brassage d'air chaud, en ordonnant, sur la base de la prise en compte d'un ou de plusieurs évènements, une rétroaction d'arrêt de la ventilation, ou de diminution de la vitesse de ventilation, ou d'augmentation de la vitesse de ventilation, du ou des ventilateurs concernés ;
et en ce que :
- l'échangeur de chaleur est constitué de deux circuits de fluide, et le véhicule comporte deux électrovannes (SV1, SV2) aptes chacune à autoriser ou interdire l'arrivée de fluide en provenance de la chaudière dans chacun des deux circuits de fluide, pour permettre au contrôleur d'ordonner la fermeture totale ou partielle de l'arrivée de fluide dans la chaudière en ordonnant la fermeture de l'une ou chacune des dites deux électrovannes, et ainsi permettre un fonctionnement où si les deux circuits sont fermés, la chaudière fonctionne en boucle sur elle-même;
ou
- l'échangeur de chaleur est constitué d'un seul circuit de fluide, et le véhicule comporte une électrovanne (SV1) qui est en communication de fluide avec la ligne d'arrivée de fluide chaud dans l'échangeur d'une part, et avec la ligne d'évacuation du fluide chaud de l'échangeur d'autre part, pour permettre au contrôleur d'ordonner la fermeture totale de l'arrivée de fluide dans la chaudière en ordonnant l'ouverture de ladite électrovanne (EV1), pour contraindre, par différence de perte de charge, le fluide chaud en provenance de la chaudière, à circuler en boucle fermée « chaudière/Electrovanne SV1/chaudière » sans atteindre l'échangeur.

9. Véhicule selon la revendication 8, **se caractérisant en ce que** le camion met en oeuvre un système de production de froid de type à injection directe d'un fluide cryogénique dans la chambre, fluide qui se vaporise en extrayant de la chaleur des produits transportés.

10. Véhicule selon la revendication 8, **se caractérisant en ce que en ce que** le camion met en oeuvre un système de production de froid de type à injection indirecte d'un fluide cryogénique dans des échangeurs présents dans la chambre, le camion étant muni d'un système d'échangeur thermique principal dans lequel circule le fluide cryogénique, ainsi que d'un système de circulation d'air, par exemple de type ventilateurs, apte à mettre en contact l'air interne à la chambre avec les parois froides de l'échangeur thermique principal.

## Patentansprüche

1. Transportverfahren für wärmeempfindliche Produkte im Kühllastkraftwagen, wobei der Lastkraftwagen mit mindestens einer Kammer (1) zum Lagern der Produkte versehen ist, wobei der Lastkraftwagen außerdem ein Heizsystem umfasst, das geeignet ist, um die Luft innerhalb mindestens einer der Kammern zu heizen, wobei das Heizsystem mindestens ein Gebläse (3) zum Durchmischen warmer Luft innerhalb der mindestens einen Kammer, deren Innenluft man zu erwärmen wünscht, umfasst, und ein System des Typs Luftheizgerät ist, wobei zu erwärmende Luft, die von außerhalb und/oder innerhalb der Kammer kommt, mit Hilfe des Gebläses zum Durchmischen warmer Luft durch einen Heizwärmeaustauscher (2), der sich im Inneren der Kammer befindet, geblasen wird, wobei der Heizwärmeaustauscher durch ein warmes Fluid versorgt wird, zum Beispiel von Warmwasser, das von einem Heizkessel (4), der sich auf dem Fahrzeug außerhalb der Kammer befindet, erzeugt wird,
wobei die Regulierung der Heizung vorgenommen wird, indem auf das oder bestimmte der Gebläse zum Durchmischen warmer Luft eingewirkt wird, indem auf der Grundlage der Berücksichtigung eines oder mehrerer Ereignisse eine Stopprückwirkung der Belüftung oder Verringerung der Belüftungsgeschwindigkeit oder Erhöhung der Belüftungsgeschwindigkeit des oder der betroffenen Gebläse angeordnet wird,
**dadurch gekennzeichnet, dass**:
A/ falls der Temperaturunterschied zwischen einem in der Kammer einzuhaltenden Sollwert und der Temperatur, die außerhalb des Lastkraftwagens herrscht, höher ist als 15 °C, die Regulierung die folgenden Situationen berücksichtigt:
a) falls die Temperatur, die im Inneren der Kammer herrscht, niedriger ist als die Solltemperatur, setzt die Steuervorrichtung das Heizsystem wie folgt in Betrieb:
- warmes Fluid, zum Beispiel Warmwasser, das von dem Heizkessel in dem Heizwärmeaustauscher erzeugt wird, wird eingelassen,
- das Gebläse zum Durchmischen warmer Luft wird in Betrieb gesetzt, um Luft innerhalb und/oder außerhalb der Kammer mit Wänden des Heizwärmeaustauschers in Berührung zu setzen,
b) falls sich die Luft, die im Inneren der Kammer herrscht, dem Sollwert nähert oder diesen Sollwert erreicht, das Stoppen der Verringerung der Drehzahl des oder der Gebläse, die zu dem Warm-Wärmeaustauschersystem gehören, angeordnet wird,
c/ falls die Temperatur, die im Inneren der Kammer herrscht, höher wird als die Solltemperatur, die Regulierung eine Zeitkonstante wie folgt berücksichtigt: falls die Temperatur, die im Inneren der Kammer herrscht, über eine Zeitkonstante t₀, zum Beispiel 5 Minuten, hinaus höher bleibt als die Solltemperatur, ordnet die Steuervorrichtung das Verringern der Leistung des Heizkessels über die Verringerung der Temperatur des Fluids, das in dem Heizkessel zirkuliert, an,
d) falls die Temperatur, die im Inneren der Kammer herrscht, wieder niedriger wird als die Solltemperatur, ordnet die Steuervorrichtung das Wiederinbetriebsetzen des oder der Gebläse, die zu dem Warm-Wärmeaustauschersystems gehören, oder die Erhöhung ihrer Drehzahl in Bezug auf eine Verringerung an, die eventuell zuvor eingetreten ist, und, falls die Temperatur, die im Inneren der Kammer herrscht, über eine Zeitkonstante, zum Beispiel 5 Minuten, hinaus niedriger bleibt als die Solltemperatur, ordnet die Steuervorrichtung die Erhöhung der Leistung des Heizkessel über die Erhöhung der Temperatur des Fluids, das in dem Heizkessel zirkuliert, an,
und
B/ falls der Temperaturunterschied zwischen einem in der Kammer einzuhaltenden Sollwert und der Temperatur, die außerhalb des Lastkraftwagens herrscht, niedriger oder gleich 15 °C ist, berücksichtigt die Regulierung eine Zeitkonstante, um das Stoppen oder das Wiederinbetriebsetzen der Produktion von Kalorien durch Annehmen der einen oder der anderen der folgenden Handlungsweisen auszulösen:
- Handlungsweise a): falls die Temperatur, die im Inneren der Kammer herrscht, höher ist als die Solltemperatur, ordnet die Steuervorrichtung zuerst das Stoppen oder die Verringerung der Drehzahl des Gebläses oder der Gebläse, die zu dem Warm-Wärmeaustauschersystem gehören, an, und, falls die Temperatur, die im Inneren der Kammer herrscht, über eine Zeitkonstante t₀, zum Beispiel 5 Minuten, hinaus höher bleibt als die Solltemperatur, ordnet die Steuervorrichtung das Stoppen des Heizkessels an, oder - Handlungsweise b): falls die Temperatur, die im Inneren der Kammer herrscht, höher ist als die Solltemperatur, ordnet die Steuervorrichtung zuerst das Stoppen oder die Verringerung der Drehzahl des Gebläses oder der Gebläse, die zu dem Warm-Wärmeaustauschersystem gehören, an, und, falls die Temperatur, die im Inneren der Kammer herrscht, über eine Zeitkonstante t₀, zum Beispiel 5 Minuten, hinaus höher bleibt als die Solltemperatur, ordnet die Steuervorrichtung das vollständige oder teilweise Schließen der Fluidzufuhr in den Heizkessel an, wobei der Heizkessel betriebsfähig bleibt.

2. Verfahren nach Anspruch 1, **dadurch gekennzeichnet, dass** die Regulierung mindestens eines der folgenden Ereignisse berücksichtigt:
- ein außerhalb des Fahrzeugs hat erfasst, dass sie niedriger als ein innerer Sollwert der Kammer ist,
- ein Sensor der Temperatur innerhalb der Kammer hat erfasst, dass sie niedriger ist als ein Temperatursollwert in der Kammer.

3. Verfahren nach Anspruch 1, **dadurch gekennzeichnet, dass** bei der Variante B/, wenn die Temperatur, die im Inneren der Kammer herrscht, über eine Zeitkonstante t₀ hinaus niedriger wird als die Solltemperatur, und falls das vollständige oder teilweise Schließen der Fluidzufuhr in den Heizkessel angeordnet wurde, die Steuervorrichtung eine Erhöhung des Leistungsbedarfs feststellt und daher das teilweise oder vollständige Wiederöffnen des Heizkessels sowie das erneute Inbetriebsetzen des oder der Gebläse, die zu dem Warm-Wärmeaustauschersystem gehören, oder die Erhöhung ihrer Drehzahl anordnet, wenn zuvor eine Verringerung aufgetreten war.

4. Verfahren nach Anspruch 1, **dadurch gekennzeichnet, dass** bei der Variante B/ der Wärmeaustauscher aus zwei Fluidkreisläufen besteht, und dass zwei Magnetventile (SV1, SV2), die jeweils geeignet sind, die Fluidzufuhr, die von dem Heizkessel kommt, in jeden der zwei Fluidkreisläufe des Wärmeaustauschers zu gestatten oder zu verbieten, und dass die Steuervorrichtung das vollständige oder teilweise Schließen der Fluidzufuhr in den Heizkessel anordnet, indem sie das Schließen eines oder beider der zwei Magnetventile anordnet, wobei der Heizkessel in einer Schleife auf sich selbst arbeitet, wenn die zwei Magnetventile geschlossen sind.

5. Verfahren nach Anspruch 1, **dadurch gekennzeichnet, dass** bei der Variante B) der Wärmeaustauscher aus einem einzigen Fluidkreislauf besteht, und dass man über ein Magnetventil (SV1) verfügt, das in fluidtechnischer Verbindung mit der Zuführleitung von warmem Fluid in den Wärmeaustauscher einerseits, und mit der Auslassleitung des warmen Fluids aus dem Wärmeaustauschers andererseits steht, und dass die Steuervorrichtung das vollständige Schließen der Fluidzufuhr in den Heizkessel anordnet, indem sie das Öffnen des Magnetventils (EV1) anordnet, um das warme Fluid, das von dem Heizkessel kommt, durch Lastverlustunterschied zu zwingen, in geschlossener Schleife "Heizkessel / Magnetventil SV1 / Heizkessel" zu zirkulieren, ohne den Wärmeaustauscher zu erreichen.

6. Verfahren nach einem der vorhergehenden Ansprüche, **dadurch gekennzeichnet, dass** der Lastkraftwagen ein Kälteproduktionssystem des Typs mit Direkteinspritzung eines kryogenen Fluids in die Kammer umsetzt, wobei das Fluid verdampft, indem es Wärme aus den transportierten Produkten extrahiert.

7. Verfahren nach einem der Ansprüche 1 bis 5, **dadurch gekennzeichnet, dass** der Lastkraftwagen ein Kälteproduktionssystem des Typs mit indirekter Einspritzung eines kryogenen Fluids in Wärmeaustauscher, die in der Kammer vorhanden sind, umsetzt.

8. Fahrzeug zum Transport von wärmeempfindlichen Produkten im Kühllastkraftwagen, wobei der Lastkraftwagen mit Folgendem versehen ist:
- mindestens eine Kammer zum Lagern der Produkte,
- mindestens ein Kryogen-Fluidvorrat, wie zum Beispiel Flüssigstickstoff,
- wobei der Lastkraftwagen außerdem ein Heizsystem umfasst, das geeignet ist, Luft innerhalb mindestens einer der Kammern zu erwärmen, wobei das Heizsystem mindestens ein Gebläse zum Durchmischen warmer Luft in der mindestens einen Kammer, deren Innenluft man zu erwärmen wünscht, umfasst, und ein System des Typs Luftheizgerät ist, wobei zu erwärmende Luft, die von außerhalb und/oder innerhalb der Kammer kommt, mit Hilfe des Gebläses zum Durchmischen warmer Luft durch einen Heizwärmeaustauscher geblasen wird, der sich im Inneren der Kammer befindet, wobei der Heizwärmeaustauscher durch ein warmes Fluid, zum Beispiel Warmwasser, das von einem Heizkessel, der sich auf dem Fahrzeug außerhalb der Kammer befindet, erzeugt wird, versorgt wird,
**dadurch gekennzeichnet, dass**:
- er eine Steuervorrichtung umfasst, die geeignet ist, das Verfahren nach einem der Ansprüche 1 bis 7 umzusetzen und insbesondere die Heizung zu regulieren, indem sie auf das oder bestimmte Gebläse zum Durchmischen warmer Luft einwirkt, indem sie auf der Grundlage der Berücksichtigung eines oder mehrerer Ereignisse eine Stopprückwirkung der Belüftung oder Verringerung der Belüftungsdrehzahl oder Erhöhung der Belüftungsdrehzahl des oder der betroffenen Gebläse anordnet,
und dass:
- der Wärmeaustauscher aus zwei Fluidkreisläufen besteht und das Fahrzeug zwei Magnetventile (SV1, SV2) umfasst, die jeweils geeignet sind, die Fluidzufuhr, die von dem Heizkessel kommt, in jeden der zwei Fluidkreisläufe zu gestatten oder zu verbieten, um es der Steuervorrichtung zu erlauben, das vollständige oder teilweise Schließen der Fluidzufuhr in die Kammer anzuordnen, indem sie das Schließen eines oder beider der zwei Magnetventile anordnet und daher ein Funktionieren erlaubt, bei dem, falls die zwei Kreisläufe geschlossen werden, der Heizkessel in Schleife auf sich selbst funktioniert,
oder
- der Wärmeaustauscher aus einem einzigen Fluidkreislauf besteht und das Fahrzeug ein Magnetventil (SV1) umfasst, das in Fluidverbindung mit der Zuführleitung von warmem Fluid in den Wärmeaustauscher einerseits, und mit der Auslassleitung des warmen Fluids aus dem Wärmeaustauscher andererseits steht, um es der Steuervorrichtung zu erlauben, das vollständige Schließen der Fluidzufuhr in dem Heizkessel anzuordnen, indem sie das Öffnen des Magnetventils (EV1) anordnet, um das warme Fluid, das von dem Heizkessel kommt, durch Lastverlustunterschied zu zwingen, in geschlossener Schleife "Heizkessel / Magnetventil SV1 / Heizkessel" zu zirkulieren, ohne den Wärmeaustauscher zu erreichen.

9. Fahrzeug nach Anspruch 8, **dadurch gekennzeichnet, dass** der Lastkraftwagen ein Kälteproduktionssystem des Typs mit Direkteinspritzung eines kryogenen Fluids in die Kammer umsetzt, wobei das Fluid verdampft, indem es Wärme aus den transportierten Produkten extrahiert.

10. Fahrzeug nach Anspruch 8, **dadurch gekennzeichnet, dass** der Lastkraftwagen ein Kälteproduktionssystem des Typs mit indirekter Einspritzung eines kryogenen Fluids in Wärmeaustauscher, die in der Kammer vorhanden sind, umsetzt, wobei der Lastkraftwagen mit einem Hauptwärmeaustauschersystem versehen ist, in dem das kryogene Fluid zirkuliert, sowie mit einem Luftzirkulationssystem, zum Beispiel des Typs Gebläse, das geeignet ist, die Luft innerhalb der Kammer mit kalten Wänden des Hauptwärmeaustauschers in Berührung zu setzen.

## Claims

1. Method for transporting heat-sensitive products in a refrigerated lorry, wherein the lorry is provided with at least one chamber (1) for storing the products, the lorry further comprising a heating system able to heat the air internal to at least one of the chambers, a heating system that comprises at least one fan (3) for stirring hot air internal to said at least one chamber where it is wished to heat the internal air, and which is a system of the forced-air type, where air to be heated, coming from the outside and/or inside of the chamber, is blown, by means of said hot-air stirring fan, through a heating heat exchanger (2) situated inside the chamber, a heating heat exchanger supplied with a hot fluid, for example hot water, produced by a boiler (4) situated on the vehicle outside the chamber, where the heating is regulated by acting on the or some of the hot-air stirring fans, by ordering, on the basis of the taking into account of one or more events, feedback for stopping the ventilation, or reducing the ventilation speed, or increasing the ventilation speed, of the fan or fans concerned,
**characterised in that**:
A/ if the difference in temperature between a set point to be complied with in the chamber and the temperature prevailing outside the lorry is greater than 15°C, the regulation takes into account the following situations:
a) if the temperature prevailing inside the chamber is less than said set-point temperature, the controller starts up the heating system in the following manner:
- hot fluid, for example hot water, produced by the boiler in the heating heat exchanger, is admitted;
- the hot-air stirring fan is started in order to bring air internal and/or external to the chamber in contact with the walls of the heating exchanger;
b) if the temperature prevailing inside the chamber approaches said set-point temperature or reaches this set point, the stoppage of or reduction in the rotation speed of the fan or fans associated with the hot exchanger system is ordered;
c) if the temperature prevailing inside the chamber becomes higher than said set-point temperature, the regulation takes into account a time constant in the following manner: if the temperature prevailing inside the chamber remains higher than said set-point temperature beyond a time constant t₀, for example 5 minutes, the controller orders the reduction in the power of the boiler via a reduction in the temperature of the fluid circulating in the boiler;
d) if the temperature prevailing inside the chamber once again becomes less than the set-point temperature, the controller orders the starting of the fan or fans associated with the hot exchanger system or an increase in their rotation speed compared with a reduction occurring previously, and, if the temperature prevailing inside the chamber remains less than said set-point temperature beyond a time constant, for example 5 minutes, the controller orders an increase in the power of the boiler via an increase in the temperature of the fluid circulating in the boiler;
and
B/ if the difference in temperature between a set point to be complied with in the chamber and the temperature prevailing outside the lorry is less than or equal to 15°C, the regulation takes into account a time constant for triggering the stoppage or restarting of the production of heat, by the adoption of one or other of the following action modes:
- action mode a): if the temperature prevailing inside the chamber is higher than said set-point temperature, the controller first of all orders the stoppage or reduction in the rotation speed of the fan or fans associated with the hot exchanger system, and, if the temperature prevailing inside the chamber remains higher than said set-point temperature beyond a time constant t₀, for example 5 minutes, the controller then orders stoppage of the boiler; or
- action mode b): if the temperature prevailing inside the chamber is higher than said set-point temperature, the controller first of all orders the stoppage of or reduction in the rotation speed of the fan or fans associated with the hot exchanger system and, if the temperature prevailing inside the chamber remains higher than said set-point temperature beyond a time constant t₀, for example 5 minutes, the controller than orders the total or partial closure of the admission of fluid into the boiler, the boiler remaining operational.

2. Method according to claim 1, **characterised in that** the regulation takes into account at least one of the following events:
- a temperature sensor external to the vehicle has detected that the temperature is below a temperature set point internal to the chamber;
- a temperature sensor internal to the chamber has detected that the temperature is below a temperature set point internal to the chamber.

3. Method according to claim 1, **characterised in that**, in variant B/ when the temperature prevailing inside the chamber once again becomes less than said set-point temperature beyond a time constant to and if the total or partial closure of the admission of fluid into the boiler had been ordered, the controller notes an increase in the power requirement and then orders the partial or total reopening of the boiler as well as the restarting of the fan or fans associated with the hot exchanger system or an increase in their rotation speed when a reduction had occurred previously.

4. Method according to claim 1, **characterised in that**, in variant B/, the heat exchanger consists of two fluid circuits, and **in that** two solenoid valves (SV1, SV2) are available, each able to allow or prevent the arrival of fluid coming from the boiler in each of the two fluid circuits of the exchanger, and **in that** the controller orders the total or partial closure of the arrival of fluid in the boiler by ordering the closure of one or each of said two solenoid valves, the boiler functioning in a loop on itself when the two solenoid valves are closed.

5. Method according to claim 1, **characterised in that**, in variant B/, the heat exchanger consists of a single fluid circuit, and **in that** a solenoid valve (SV1) is available that is in fluid communication with the hot-fluid inlet line to the exchanger on the one hand, and with the hot-fluid discharge line from the exchanger on the other hand, and **in that** the controller orders the total closure of the admission of fluid into the boiler by ordering the opening of said solenoid valve (EV1), in order, through difference in pressure drop, to force the hot fluid coming from the boiler to circulate in a "boiler/solenoid valve SV1/boiler" closed loop without reaching the exchanger.

6. Method according to one of the preceding claims, **characterised in that** the lorry uses a cold-production system of the type involving direct injection of a cryogenic fluid into the chamber, a fluid that vaporises by extracting heat from the products being transported.

7. Method according to one of claims 1 to 5, **characterised in that** the lorry uses a cold-production system of the type involving indirect injection of a cryogenic fluid into the exchangers present in the chamber.

8. Vehicle for transporting heat-sensitive products in a refrigerated lorry, a lorry provided with:
- at least one chamber for storing the products,
- a vessel for a cryogenic fluid such as liquid nitrogen,
- the lorry further comprising a heating system able to heat the air internal to at least one of the chambers, a heating system that comprises at least one fan for stirring hot air internal to said at least one chamber where it is wished to heat the internal air, and which is a system of the forced-air type, where air to be heated, coming from the outside and/or inside of the chamber, is blown, by means of said hot-air stirring fan, through a heating heat exchanger situated inside the chamber, a heating heat exchanger supplied with a hot fluid, for example hot water, produced by a boiler situated on the vehicle outside the chamber,
**characterised in that**:
- it comprises a controller able to allow implementation of the method according to one of claims 1 to 7 and in particular to regulate the heating by acting on the or some of the hot-air stirring fans by ordering, on the basis of the taking into account of one or more events, a feedback stopping the ventilation, or reducing the ventilation speed, or increasing the ventilation speed, of the fan or fans concerned;
and **in that**:
- the heat exchanger consists of two fluid circuits, and the vehicle comprises two solenoid valves (SV1, SV2) each able to allow or prevent the arrival of fluid coming from the boiler in each of the two fluid circuits, to enable the controller to order total or partial closure of the arrival of fluid into the boiler by ordering the closure of one or each of said two solenoid valves, and thus to allow functioning where, if the two circuits are closed, the boiler functions in a loop on itself;
or
- the heat exchanger consists of a single fluid circuit, and the vehicle comprises a solenoid valve (SV1) that is in fluid communication with the line by which the hot fluid arrives in the heat exchanger on the one hand, and with the line discharging hot fluid from the exchanger on the other hand, to enable the controller to order total closure of the arrival of fluid in the boiler by ordering the opening of said solenoid valve (EV1), in order, through pressure-drop difference, to force the hot fluid coming from the boiler to circulate in a "boiler/solenoid valve SV1/boiler" closed loop without reaching the exchanger.

9. Vehicle according to claim 8, **characterised in that** the lorry uses a cold-production system of the type involving direct injection of a cryogenic fluid in the chamber, a fluid that vaporises by extracting heat from the products being transported.

10. Vehicle according to claim 8, **characterised in that** the lorry uses a cold-production system of the type involving indirect injection of a cryogenic fluid in the exchangers present in the chamber, the lorry being provided with a main heat exchanger system in which the cryogenic fluid circulates, as well as an air circulation system, for example of the fan type, able to put the air internal to the chamber in contact with the cold walls of the main heat exchanger.
